# EUROPEAN PATENT SPECIFICATION

(11) **EP 2 549 690 B1**
(45) Date of publication and mention of the grant of the patent: **02.10.2019**
(21) Application number: 11755656.3
(22) Date of filing: 14.03.2011
(51) Int. Cl.: H04L 29/06, H04L 12/24, H04L 12/46, H04L 12/26

(54) **MEDIA ACCESS CONTROL ADDRESS KEEP-ALIVE DEVICE AND METHOD FOR CONVERGENCE PORT**
VORRICHTUNG ZUR AUFRECHTERHALTUNG VON MEDIENZUGANGS-KONTROLLADRESSEN UND VERFAHREN FÜR EINEN KONVERGENZANSCHLUSS
DISPOSITIF ET PROCÉDÉ DE MAINTIEN EN ACTIVITÉ D'ADRESSE DE COMMANDE D'ACCÈS AU SUPPORT POUR PORT DE CONVERGENCE

(30) Priority: 16.03.2010 CN 201010132298
(43) Date of publication of application: 23.01.2013
(73) Proprietor: ZTE Corporation, Shenzhen, Guangdong 518057 (CN)
(72) Inventor: GAO, Feng, Shenzhen Guangdong 518057 (CN); GUO, Liang, Shenzhen Guangdong 518057 (CN)
(74) Representative: Lavoix
(86) International application number: PCT/CN2011/071779
(87) International publication number: WO 2011/113339

(56) References cited:
- CN-A- 101 179 514
- CN-A- 101 834 781
- US-A1- 2003 067 926
- US-A1- 2003 067 926
- US-A1- 2009 319 670

## Description

### TECHNICAL FIELD

The disclosure relates to Media Access Control (MAC) address keep-alive technology, and in particular to a device and method for keeping an MAC address of an aggregate port alive in two-layer distributed network equipment.

### BACKGROUND

An MAC address is an identifier used for identifying a Local Area Network (LAN) node, and is globally unique for equipment, such as a network card interface. The MAC address is 48 bits, which is represented by twelve hexadecimal numbers; the first six hexadecimal numbers are managed by the Institute of Electrical and Electronics Engineers (IEEE) and are used to identify producers or manufacturers and constitute an Organizational Unique Identifier (OUI); and the last six hexadecimal numbers include a serial number of a network card or a value set by a specific hardware manufacturer.

Learning, keeping-alive and aging of an MAC address, related to the MAC address, will be introduced hereinafter. First of all, the learning of an MAC address means that a source MAC address of each received message is stored in a learned Virtual Local Area Network (VLAN) to enable the message containing the source MAC address to be only forwarded to a port at the source MAC address; and a message, which is sent to an address which is not learned, is forwarded to all ports of the VLAN. This method helps to minimize traffic of connected LANs; and an MAC address is functioned to enable a message to be forwarded to a specified port after reaching equipment and thus reduce traffic of an LAN. However, each MAC address needs to occupy actual hardware and software resources; when a certain MAC address does not necessarily exist, the MAC address would be deleted and software and hardware resources occupied by the MAC address are released after a period of time, which is called the aging of the MAC address; if the equipment further receives a message containing the MAC address during the period of time, then because the MAC address already exists, the MAC address does not need to be learned and further cannot be aged, one action needed to be done at this moment is keeping the MAC address alive.

In three actions above, the keeping-alive action is used most frequently. For a simple example, when a computer is turned on for wok in the morning, the learning of an MAC address is performed once, and when the computer is turned off after work in the evening, the aging of the MAC address is performed once; in the intermediate eight hours, by taking a minute as a unit, the keeping-alive of the MAC address may be set to be performed every one minute.

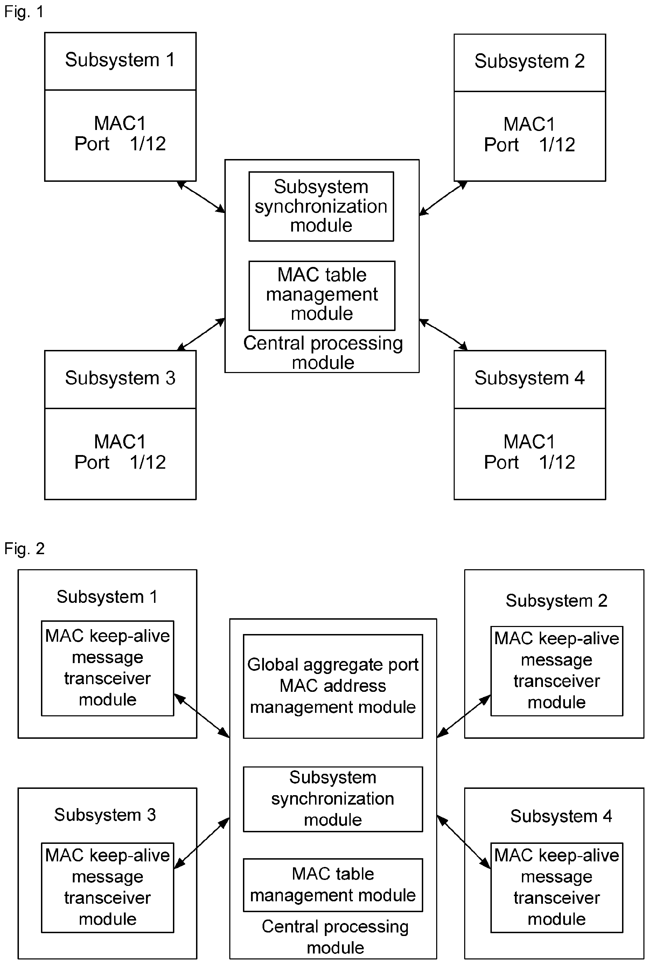

For distributed network equipment shown in Fig. 1, after one MAC address is learned on a port 12 of a subsystem 1, the MAC address needs to be synchronized to all other subsystems through a subsystem synchronization module in a central processing module, in this way, it can be ensured that other subsystems, after receiving a message containing the MAC address, can forward the message to a corresponding port which learns the MAC address, i.e., the port 12 of the subsystem 1.

In a period of time, if messages containing the MAC address can be always received on the port 12 of the subsystem 1, then the MAC address is needed to be retained at all subsystems, but the keeping-alive action can be performed on the subsystem 1 only after a message containing the MAC address is received on the port 12 of the subsystem 1; since other subsystems are unable to receive such a message, there is a "false aging" process of the MAC address, and since the MAC address exists in a hardware MAC table at this moment, software determines whether a port corresponding to the MAC address in the hardware MAC table is located on the subsystem after receiving the "false aging" message; if the port is not located on the subsystem, then the "false aging" message is ignored and thus the MAC addresses on other subsystems would not be deleted; if the MAC address on the subsystem 1 is not kept alive, then an MAC table management module is notified to delete corresponding MAC addresses on all subsystems.

However, a kind of aggregate port exists in two-layer network equipment, and the kind of aggregate port is a logic concept and is a set of physical ports, and member physical ports of one aggregate port can exist on different subsystems; after an MAC address is learned on the aggregate port, a port corresponding to the MAC address is an aggregate port, rather than a certain physical port.

In a related prior, a keep-alive principle for an MAC address of the above physical port is not applicable to an aggregate port of two-layer network equipment, because the aggregate port probably does not only belongs to any one subsystem. Member physical ports of one aggregate port often belongs to multiple subsystems at the same time; if keeping-alive of an MAC address is performed according to a subsystem to which a physical port belongs, then the MAC address corresponding to a certain subsystem inevitably can not be kept alive, and also, a "false aging" message can not be voted down by determining a subsystem to which a port belongs, as done in a process in which "false aging" is processed by a physical port, unless all subsystems have member physical ports of the aggregate port and all member physical ports are capable of receiving a message used for keeping-alive. Therefore, the MAC table management module will delete the MAC address which does not need to be deleted; after the MAC address is deleted, two-layer network equipment is flood with messages taking the MAC address as a destination address, and thus an occupation rate of bandwidth is increased.

US 2003/067926 discloses a distributed address database management technique involves maintain an address database by each of a number of interconnected modules. Each module maintains a number of locally owned address entries and a number of remotely owned address entries in the address database. Each module monitors the status of its locally owned address entries, maintains the locally owned address entries based upon the status, and provides the status to the other interconnected modules. Each module maintains the remotely owned address entries based upon the status received from the other interconnected modules. When a module adds a locally owned address entry to its address database, the module notifies the other interconnected modules, which in turn add a corresponding remotely owned address entry to their respective address database. When a module purges a locally owned address entry from its address database, the module notifies other interconnected modules, which in turn purge the corresponding remotely owned address entries from their respective address database. Each module may periodically send a keep-alive message including a list of active addresses to the other interconnected modules, which maintain a persistence timer for each of the remotely owned address entries and purge a particular remotely owned address entry if the corresponding persistence timer expires before receiving a keep-alive message indentifying the remotely owned address entry as an active remotely owned address entry. Upon receiving a keep-alive message, a module adds a remotely owned address entry for a particular address to its address database if such a remotely owned address entry is not already maintained in the address database. A module purges all remotely owned address entries from its address database if the module is reconfigured to operate in a stand-alone module. A module purges all remotely owned address entries associated with a particular interconnected module if that particular interconnected module is removed.

### SUMMARY

In view of the above, the main purpose of the disclosure is to provide a device and a method for keeping a Media Access Control (MAC) address of an aggregate port alive, so as to avoid erroneous deletion of the MAC address of the aggregate port and flooding of messages which take the MAC address as a destination address on two-layer network equipment, thus reducing an occupation rate of bandwidth.

The features of the method and system according to the present invention are defined in the independent claims, and the preferable features according to the present invention are defined in the dependent claims. Any other subject-matter outside the scope of protection of the claims is to be regarded as examples not in accordance with the invention.

By means of the device and the method of the disclosure, an MAC address of an aggregate port can be kept alive within an MAC address aging period, and flooding of destination messages on two-layer network equipment caused due to erroneous deletion of the MAC address of the aggregate port can be avoided effectively; in addition, an unnecessary MAC address can further be aged, so that an occupation rate of network bandwidth can be reduced effectively and thus system resources can be saved.

### BRIEF DESCRIPTION OF THE DRAWINGS

Fig. 1 shows a structural diagram of a distributed system according to a related prior;
Fig. 2 shows a structural diagram of a device for keeping a Media Access Control (MAC) address of an aggregate port alive according to the disclosure; and
Fig. 3 shows a flowchart of a method for keeping an MAC address of an aggregate port alive according to the disclosure.

### DETAILED DESCRIPTION

The basic concept of the disclosure is that: a subsystem receiving a message in a Media Access Control (MAC) address aging period sends an MAC keep-alive message to a global aggregate port MAC address management module; and the global aggregate port MAC address management module sends the MAC keep-alive message received to all subsystems for keeping the MAC address alive.

A device for keeping an MAC address of an aggregate port alive according to the disclosure is shown in Fig. 2, and the device includes: a global aggregate port MAC address management module and an MAC keep-alive message transceiver module; wherein
the global aggregate port MAC address management module is located in a central processing module of network equipment and configured to, within an MAC address aging period, receive an MAC keep-alive message from a subsystem and send the MAC keep-alive message to all subsystems; and
the MAC keep-alive message transceiver module is located in a subsystem and configured to, within the MAC address aging period, send an MAC keep-alive message to the global aggregate port MAC address management module and receive an MAC keep-alive message from the global aggregate port MAC address management module.

The device further includes: a subsystem synchronization module and an MAC table management module, which are located in the central processing module of the network equipment; wherein
the subsystem synchronization module is configured to synchronize the MAC address of the aggregate port learned by one subsystem to other subsystems; and
the MAC table management module is configured to keep the MAC address of the aggregate port alive or age it.

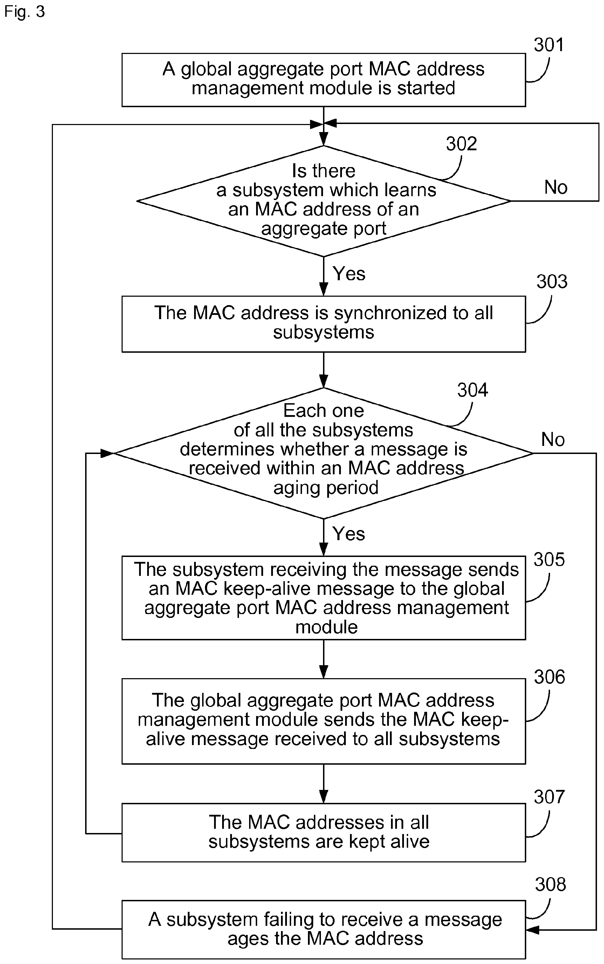

Based on the device above, the disclosure further provides a method for keeping a Media Access Control (MAC) address of an aggregate port alive; as shown in Fig. 3, the method includes the following steps:
Step 301: a global aggregate port MAC address management module is started;
Step 302: it is determined whether there is a subsystem which learns an MAC address of an aggregate port; if there is such a subsystem, Step 303 is executed; otherwise, Step 302 continues being executed;
   in this step, a real port and a virtual port are configured manually to form an aggregate port; since an MAC address learned on the real port will be automatically learned on the virtual port, it can be determined whether the MAC address of the aggregate port is learned, wherein the process belongs to a related prior;
Step 303: the MAC address is synchronized to all subsystems;
   in this step, the MAC address is synchronized to other subsystems by a subsystem synchronization module of a central processing module, wherein a port corresponding to the MAC address is the aggregate port; this step belongs to a related prior and thus is not be described here in detail;
Step 304: each one of all the subsystems determines whether a message is received within an MAC address aging period; if a message is received within the MAC address aging period, Step 305 is executed; otherwise, Step 308 is executed;
   in this step, the message received by a subsystem thereof within the MAC address aging period contains a source MAC address for keeping the MAC address alive;
Step 305: the subsystem receiving the message sends an MAC keep-alive message to the global aggregate port MAC address management module;
   in this step, the MAC keep-alive message received by the global aggregate port MAC address management module contains: the source MAC address and a name of the subsystem;
Step 306: the global aggregate port MAC address management module sends the MAC keep-alive message received to all the subsystems;
Step 307: the MAC addresses in all the subsystems are kept alive, and Step 304 is executed;
   in this step, the MAC addresses can be kept alive by an MAC table management module of the central processing module, wherein the method belongs to a related prior and thus is not be described here in detail; and
Step 308: a subsystem failing to receive a message ages the MAC address, and Step 302 is executed;
   in this step, aging of the MAC address can be realized by the MAC table management module, so that the aging of the MAC address in all the subsystems is realized, wherein the method belongs to a related prior and thus is not be described here in detail.

In the disclosure, keeping an MAC address alive is sending an MAC keep-alive message by a global aggregate port MAC address management module to all subsystems so as to keep the MAC address alive in all the subsystems; while aging of an MAC address is aging of an MAC address of a subsystem realized by the subsystem failing to receive a message within an MAC address aging period; and periods of aging an MAC address realized by all subsystems are same in principle.

## Claims

1. A device for keeping a Media Access Control (MAC) address of an aggregate port alive, **characterized in that** comprising: a global aggregate port MAC address management module and an MAC keep-alive message transceiver module; wherein
the global aggregate port MAC address management module is located in a central processing module of distributed network equipment and configured to, within an MAC address aging period, receive an MAC keep-alive message from a subsystem and send the MAC keep-alive message to all subsystems; and
the MAC keep-alive message transceiver module is located in a subsystem and configured to, within the MAC address aging period, send an MAC keep-alive message to the global aggregate port MAC address management module and receive an MAC keep-alive message from the global aggregate port MAC address management module;
wherein the MAC keep-alive message contains: a source MAC address, and a name of the subsystem.

2. The device according to claim 1, further comprising: a subsystem synchronization module and an MAC table management module; wherein
the subsystem synchronization module is configured to synchronize the MAC address of the aggregate port learned by one subsystem to other subsystems; and
the MAC table management module is configured to keep the MAC address of the aggregate port alive or age it.

3. A method for keeping a Media Access Control (MAC) address of an aggregate port alive, **characterized in that** comprising:
sending, by a subsystem receiving a message within an MAC address aging period, an MAC keep-alive message to a global aggregate port MAC address management module; and
sending, by the global aggregate port MAC address management module located in a central processing module of distributed network equipment, the MAC keep-alive message received to all subsystems;
wherein the MAC keep-alive message contains: a source MAC address, and a name of the subsystem.

4. The method according to claim 3, further comprising: before receiving the message by the subsystem, synchronizing, after one subsystem learns the MAC address of the aggregate port, the MAC address to all the subsystems.

5. The method according to claim 3 or 4, further comprising: after sending the MAC keep-alive message to all the subsystems, keeping the MAC address alive in all the subsystems.

6. The method according claim 5, further comprising: if a subsystem fails to receive a message within the MAC address aging period, aging, by the subsystem failing to receive a message, the MAC address.

## Patentansprüche

1. Vorrichtung zum Aktivhalten (Keep Alive) einer MAC-(Media-Access-Control-)Adresse eines Sammelanschlusses (Aggregate Port), **dadurch gekennzeichnet, dass** sie Folgendes umfasst: ein globales Sammelanschluss-MAC-Adressen-Verwaltungsmodul und ein MAC-Keep-Alive-Nachrichten-Sendeempfängermodul, wobei:
sich das globale Sammelanschluss-MAC-Adressen-Verwaltungsmodul in einem zentralen Verarbeitungsmodul eines Geräts für ein verteiltes Netzwerk befindet und dafür konfiguriert ist, innerhalb einer MAC-Adressen-Alterungsperiode eine MAC-Keep-Alive-Nachricht von einem Teilsystem zu empfangen und die MAC-Keep-Alive-Nachricht an alle Teilsysteme zu senden, und
sich das MAC-Keep-Alive-Nachrichten-Sendeempfängermodul in einem Teilsystem befindet und dafür konfiguriert ist, innerhalb der MAC-Adressen-Alterungsperiode eine MAC-Keep-Alive-Nachricht an das globale Sammelanschluss-MAC-Adressen-Verwaltungsmodul zu senden und eine MAC-Keep-Alive-Nachricht von dem globalen Sammelanschluss-MAC-Adressen-Verwaltungsmodul zu empfangen,
wobei die MAC-Keep-Alive-Nachricht Folgendes enthält: eine Quell-MAC-Adresse und einen Namen des Teilsystems.

2. Vorrichtung nach Anspruch 1, ferner Folgendes umfassend: ein Teilsystem-Synchronisationsmodul und ein MAC-Tabellenverwaltungsmodul, wobei:
das Teilsystem-Synchronisationsmodul dafür konfiguriert ist, die von einem Teilsystem erlernte MAC-Adresse des Sammelanschlusses mit anderen Teilsystemen zu synchronisieren, und
das MAC-Tabellenverwaltungsmodul dafür konfiguriert ist, die MAC-Adresse des Sammelanschlusses aktiv zu halten oder veralten zu lassen.

3. Verfahren zum Aktivhalten (Keep Alive) einer MAC-(Media-Access-Control-)Adresse eines Sammelanschlusses, **dadurch gekennzeichnet, dass** es Folgendes umfasst:
Senden einer MAC-Keep-Alive-Nachricht an ein globales Sammelanschluss-MAC-Adressen-Verwaltungsmodul durch ein Teilsystem, das eine Nachricht in einer MAC-Adressen-Alterungsperiode empfängt, und
Senden der empfangenen MAC-Keep-Alive-Nachricht an alle Teilsysteme durch das globale Sammelanschluss-MAC-Adressen-Verwaltungsmodul, das sich in einem zentralen Verarbeitungsmodul eines Geräts eines verteilten Netzwerks befindet,
wobei die MAC-Keep-Alive-Nachricht Folgendes enthält: eine Quell-MAC-Adresse und einen Namen des Teilsystems.

4. Verfahren nach Anspruch 3, ferner Folgendes umfassend: vor dem Empfangen der Nachricht durch das Teilsystem, Synchronisieren der MAC-Adresse für alle Teilsysteme, nachdem ein Teilsystem die MAC-Adresse des Sammelanschlusses erlernt hat.

5. Verfahren nach Anspruch 3 oder 4, ferner Folgendes umfassend: nach dem Senden der MAC-Keep-Alive-Nachricht an alle Teilsysteme Aktivhalten der MAC-Adresse in allen Teilsystemen.

6. Verfahren nach Anspruch 5, ferner Folgendes umfassend: wenn ein Teilsystem eine Nachricht nicht innerhalb der MAC-Adressen-Alterungsperiode empfängt, Veraltenlassen der MAC-Adresse durch das Teilsystem, das eine Nachricht nicht empfängt.

## Revendications

1. Dispositif destiné à maintenir en activité une adresse de commande d'accès au support (MAC) d'un port agrégé, **caractérisé en ce qu'**il comprend : un module de gestion d'adresses MAC de port agrégé global et un module d'émetteur-récepteur de messages de maintien en activité d'adresse MAC ; dans lequel
le module de gestion d'adresses MAC de port agrégé global est situé dans un module de traitement central d'équipement de réseau réparti et est configuré de manière à, au cours d'une période de vieillissement d'adresse MAC, recevoir un message de maintien en activité d'adresse MAC en provenance d'un sous-système, et envoyer le message de maintien en activité d'adresse MAC à tous les sous-systèmes ; et
le module d'émetteur-récepteur de messages de maintien en activité d'adresse MAC est situé dans un sous-système et est configuré de manière à, au cours de la période de vieillissement d'adresse MAC, envoyer un message de maintien en activité d'adresse MAC au module de gestion d'adresses MAC de port agrégé global, et recevoir un message de maintien en activité d'adresse MAC en provenance du module de gestion d'adresses MAC de port agrégé global ;
dans lequel le message de maintien en activité d'adresse MAC contient : une adresse MAC source et un nom du sous-système.

2. Dispositif selon la revendication 1, comprenant en outre : un module de synchronisation de sous-systèmes et un module de gestion de table d'adresses MAC ; dans lequel
le module de synchronisation de sous-systèmes est configuré de manière à synchroniser l'adresse MAC du port agrégé, apprise par un sous-système, sur d'autres sous-systèmes ; et
le module de gestion de table d'adresses MAC est configuré de manière à maintenir en activité ou à laisser vieillir l'adresse MAC du port agrégé.

3. Procédé de maintien en activité d'une adresse de commande d'accès au support (MAC) d'un port agrégé, **caractérisé en ce qu'**il comprend les étapes ci-dessous consistant à :
envoyer, par le biais d'un sous-système recevant un message au cours d'une période de vieillissement d'adresse MAC, un message de maintien en activité d'adresse MAC à un module de gestion d'adresses MAC de port agrégé global ; et
envoyer, par le biais du module de gestion d'adresses MAC de port agrégé global situé dans un module de traitement central d'équipement de réseau réparti, le message de maintien en activité d'adresse MAC reçu, à tous les sous-systèmes ;
dans lequel le message de maintien en activité d'adresse MAC contient : une adresse MAC source et un nom du sous-système.

4. Procédé selon la revendication 3, comprenant en outre l'étape ci-après consistant à : avant de recevoir le message, par le biais du sous-système, synchroniser, après qu'un sous-système a appris l'adresse MAC du port agrégé, l'adresse MAC sur tous les sous-systèmes.

5. Procédé selon la revendication 3 ou 4, comprenant en outre l'étape ci-après consistant à : après avoir envoyé le message de maintien en activité d'adresse MAC à tous les sous-systèmes, maintenir l'adresse MAC en activité dans tous les sous-systèmes.

6. Procédé selon la revendication 5, comprenant en outre l'étape ci-après consistant à : si un sous-système ne parvient pas à recevoir un message au cours de la période de vieillissement d'adresse MAC, laisser vieillir, par le biais du sous-système ne parvenant pas à recevoir ledit message, l'adresse MAC.
